(19) Europäisches Patentamt
European Patent Office
Office européen des brevets

(11) Publication number: 0 549 977 A1

(12) # EUROPEAN PATENT APPLICATION

(21) Application number: 92121589.3

(22) Date of filing: 18.12.92

(51) Int. Cl.5: C08G 75/02, C08L 81/02, C08L 71/12, C08G 81/00

(30) Priority: 25.12.91 JP 342586/91
31.03.92 JP 77500/92

(43) Date of publication of application:
07.07.93 Bulletin 93/27

(84) Designated Contracting States:
DE FR GB IT NL

(71) Applicant: MITSUBISHI PETROCHEMICAL CO., LTD.
5-2, Marunouchi 2-chome
Chiyoda-ku Tokyo(JP)

(72) Inventor: Ohmura, Haruo, c/o Mitsubishi Petrochem.Co.,Ltd.
1, Toho-cho
Yokkaichi-shi, Mie(JP)
Inventor: Tanaka, Tomohiko,c/o Mitsubishi Petrochem.Co.,Ltd.
1, Toho-cho
Yokkaichi-shi, Mie(JP)

(74) Representative: Hansen, Bernd, Dr. Dipl.-Chem. et al
Hoffmann, Eitle & Partner Patent- und Rechtsanwälte Arabellastrasse 4 Postfach 81 04 20
W-8000 München 81 (DE)

(54) **Carboxyl-containing polyphenylene sulfide, process for producing the same, and resin composition containing the same.**

(57) A process for producing carboxyl-containing PPS comprising reacting PPS with a modifier having a carboxyl group and a mercapto group or a disulfide group in the molecule thereof, e.g., thiomalic acid or 4,4'-dithiodi(n-butyric acid), in a solvent or in a molten state. The carboxyl-containing PPS exhibits high compatibility with modified PPE containing an epoxy group, an alcoholic hydroxyl group, or an amino group to provide a homogeneous polymer alloy.

EP 0 549 977 A1

## FIELD OF THE INVENTION

This invention relates to carboxyl-containing polyphenylene sulfide, a process for producing the same, and a resin composition containing the same. The carboxyl-containing polyphenylene sulfide exhibits increased compatibility as compared with unmodified polyphenylene sulfide with other resins, such as polyester, e.g., polybutylene terephthalate, polyamide, and polar group-modified polypropylene or polyphenylene ether (the polar group includes an amino, an epoxy or a hydroxyl group) and results in a resin composition which provides molded articles with excellent solvent resistance, heat resistance, and mechanical characteristics. Therefore, the carboxyl-containing polyphenylene sulfide is useful as a modifier for polyphenylene sulfide, as a precursor of a compatibilizer between polyphenylene sulfide and other resins, and as a precursor of grafted or block copolymers of polyphenylene sulfide.

## BACKGROUND OF THE INVENTION

Polyphenylene sulfide (hereinafter abbreviated as PPS) is known as a high-melting point, heat resistant resin with excellent fluidity, organic solvent resistance, electrical characteristics, and flame retardance. For use as a molding material, however, PPS has poor extrusion molding stability and poor injection molding stability due to its low degree of polymerization. Further, the glass transition temperature of PPS is not very high, and as a result, PPS undergoes a considerable reduction in rigidity at high temperatures. Improvements in performance have been achieved by compounding PPS with inorganic fillers such as glass fiber, carbon fiber, talc, and silica. However, molded articles obtained from PPS compositions containing these types of inorganic fillers tend to suffer from deterioration of appearance or warpage.

In order to overcome the disadvantages of PPS, blending of other engineering plastics, such as polyphenylene ether, polybutylene terephthalate, polyamide, and polyolefins, have been attempted. However, PPS and these blending polymers are essentially incompatible with each other, which results in resin articles that are unacceptable for practical use due to brittleness, poor mechanical strength and poor impact strength. "Incompatible", as used herein, means that the blended polymers do not form a single phase upon mixing.

For example, blending polyphenylene ether (hereinafter abbreviated as PPE) and PPS to improve moldability of PPE has been suggested as disclosed in JP-B-56-34032 (the term "JP-B" as used herein means an "examined published Japanese patent application"). However, the polymer blend, though exhibiting improved moldability, has poor affinity at the interface between the PPE and the PPS because these two resins are essentially incompatible with each other. As a result, the composition undergoes phase separation on molding, which fails to provide molded articles having satisfactory mechanical strength.

In order to overcome the above-described problem of incompatibility between PPS and PPE, several proposals have been made to date. For instance, JP-A-59-164360 and JP-A-59-213758 (the term "JP-A" as used herein means an "unexamined published Japanese patent application") disclose compounding an epoxy resin with a PPS/PPE blend, and JP-A-2-86652 and JP-A-1-213361 disclose compounding a PPS/PPE blend with an epoxy-containing styrene polymer. It has also been proposed to modify PPE by introducing various functional groups to provide improved compatibility with PPS. For example, JP-A-64-36645 and JP-A-2-36261 disclose acid-modified PPE obtained by melt-kneading PPE with a compound having an ethylenically unsaturated bond and an acid anhydride group in the same molecule, namely, maleic anhydride. However, all of the resin compositions proposed have insufficient mechanical strength, because PPS itself has no reactive functional group.

In blending two polymers, a graft or block copolymer of the two polymers is usually used as a compatibilizer. However, having no functional group in the molecule, PPS does not react with a functional group of another blending polymer, such as polyamide and polyester.

For the purpose of introducing a functional group into PPS, JP-W-3-502474 or EP-A-405135 (the term "JP-W" as used herein means an unexamined published international patent application) disclose a process for producing amino- or carboxyl-containing PPS by reacting PPS with an aromatic disulfide having a functional group, e.g., 4,4'-bis(4-carboxyphthalimidophenyl) disulfide, as a modifying agent. However, the reaction results in a reduction in molecular weight of PPS, and the modified PPS is very brittle. Therefore, there still is a demand for a technique easily preparing functionalized PPS.

## SUMMARY OF THE INVENTION

An object of the present invention is to provide a process for producing functionalized PPS having excellent affinity to PPE, polyolefins, polyester, or polyamide.

Another object of the present invention is to provide a thermoplastic resin composition comprising functionalized PPS and other resins which provides molded articles with excellent mechanical strength, thermal rigidity, and appearance.

The present invention provides a process for producing carboxyl-containing PPS comprising reacting PPS with a mercapto compound represented by formula (I):

$HS\text{-}R^1\text{-}COOR^2$ (I)

wherein $R^1$ represents an aliphatic or alicyclic residue having from 1 to 10 carbon atoms; and $R^2$ represents a hydrogen atom, a hydrocarbon group having from 1 to 10 carbon atoms, or an alkali metal atom, or a disulfide compound represented by formula (II):

$R^2OOC\text{-}R^1\text{-}S\text{-}S\text{-}R^1\text{-}COOR^2$ (II)

wherein $R^1$ and $R^2$ are as defined above.

The present invention further relates to a thermoplastic resin composition comprising

(A) from 10 to 90% by weight of carboxyl-containing PPS obtained by reacting PPS with a mercapto compound represented by formula (I) or a disulfide compound represented by formula (II)

and

(B) from 10 to 90% by weight of a functional PPE selected from the group consisting of

($b_1$) an epoxy-containing PPE,

($b_2$) an alcoholic hydroxyl-containing PPE represented by formula (III):

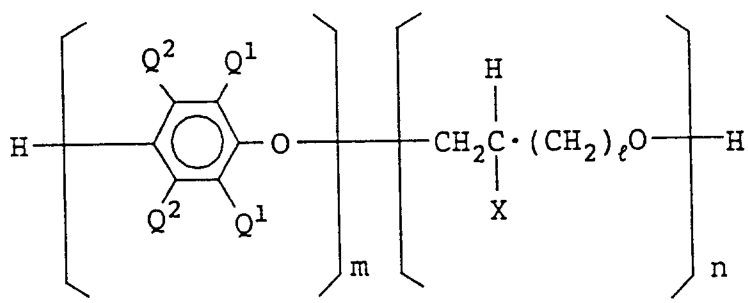

(III)

wherein $Q^1$ represents a halogen atom, a primary or secondary alkyl group, an araliphatic hydrocarbon group, an aminoalkyl group, a halo-hydrocarbon group, a hydrocarbon oxy group, or a halo-hydrocarbon oxy group; $Q^2$ represents a hydrogen atom, a halogen atom, a primary or secondary alkyl group, a halo-hydrocarbon group, or a halo-hydrocarbon oxy group; X represents a hydrogen atom, an alkyl group having from 1 to 8 carbon atoms, or a hydroxyl group; $\ell$ represents a number of from 0 to 8; m represents a number of from 10 to 400; and n represents a number of from 1 to 10,

($b_3$) an alcoholic hydroxyl-containing PPE obtained by reacting PPE with a (meth)acrylate represented by formula (IV):

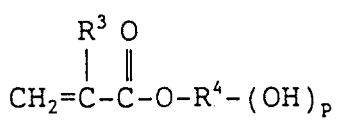

(IV)

wherein $R^3$ represents a hydrogen atom or a methyl group; $R^4$ represents a hydrocarbon group having 2 to 4 carbon atoms; and p represents 1 or 2,

and

($b_4$) an amino-containing PPE.

BRIEF DESCRIPTION OF THE DRAWING

Figure 1 is an infrared absorption spectrum of a carboxyl-containing PPS press sheet prepared in Example 2, showing an absorption assigned to the carboxyl group at 1735 $cm^{-1}$.

DETAILED DESCRIPTION OF THE INVENTION

PPS, which can be used as a starting polymer for preparing carboxyl-containing PPS, is a crystalline resin mainly comprising a repeating unit represented by formula (V):

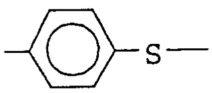

(V)

For improving physical properties such as heat resistance, the PPS starting polymer preferably includes a homopolymer of the repeating unit (V) and a copolymer comprising at least 80 mol%, and more preferably at least 90 mol%, of the repeating unit (V) and up to 20 mol% of one or more repeating units copolymerizable therewith. Examples of the copolymerizable units are shown below.

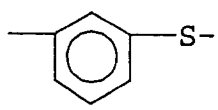

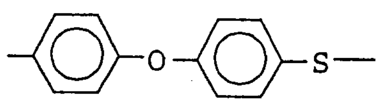

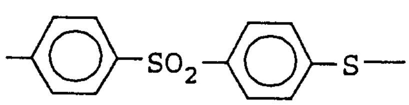

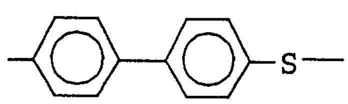

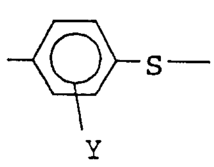

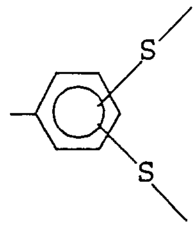

wherein Y represents an alkyl group having from 1 to 8 carbon atoms, a phenyl group, or an alkoxy group, and preferably a lower alkyl group.

In order to improve the physical properties of molded articles, the PPS starting polymer preferably has a substantially linear structure. PPS containing a crosslinked structure, such as (1) a polymerization-crosslinked product prepared by conducting polymerization in the presence of an effective amount of a crosslinking agent (e.g., a trihalobenzene) and (2) a thermally crosslinked product prepared by heat treating a polymer in the presence of, e.g., oxygen, can also be employed, provided that the physical properties of molded articles are not substantially impaired.

The PPS used in the present invention preferably has a melt viscosity at 300 °C of from 100 to 100,000 poise, more preferably from 500 to 50,000 poise, and most preferably from 500 to 20,000 poise. If the melt viscosity is out of this range, too high or too low fluidity makes molding difficult.

The PPS can be prepared by any process according to need. In particular, the PPS satisfying the above-described preferred criteria can be prepared in accordance with the process described in JP-B-45-3368 in which polymers of relatively low molecular weight are produced, the process disclosed in JP-B-52-12240 in which linear polymers of relatively high molecular weight are produced, or a process in which a low-molecular weight polymer is heated in the presence of oxygen to obtain a crosslinked polymer, or modified versions of the above processes according to need.

If desired, PPS may be treated with hot water, etc. where a fibrous filler is used in combination.

The modifier to be reacted with PPS is a compound containing a mercapto group or a disulfide group and a carboxyl group or a derivative thereof (e.g., an alkyl ester group or an alkali metal salt) in the same molecule and includes the compounds represented by formulae (I) and (II). In formulae (I) and (II), the alkyl group of the carboxylic acid alkyl ester moiety preferably has from 1 to 8 carbon atoms, e.g., methyl, ethyl, propyl, and butyl groups, and the alkali metal salt can be formed, for example, with lithium, sodium, and potassium, with sodium being preferred.

Specific examples of suitable modifiers are thiomalic acid, 4,4'-dithiodi(n-butyric acid), dithiodiacetic acid, dithiodiglycolic acid, 2,2'-dithiodipropionic acid, 3-mercaptopropionic acid, 3,3'-dithiodipropionic acid, mercaptoacetic acid, 2-mercaptopropionic acid, mercaptovaleric acid, and alkyl esters of any of the above acids (e.g., 2-ethylhexyl 3-mercaptopropionate) or alkali metal salts of any of the above acids. Preferred of these are thiomalic acid, 4,4'-dithiodi(n-butyric acid), and their derivatives at the carboxyl group.

Carboxyl-containing PPS can easily be prepared by reacting PPS with the above-mentioned modifier either in a molten state or in an organic solvent.

In one embodiment, the reaction can be carried out easily by heating 100 parts by weight of PPS and from 0.1 to 100 parts by weight, and preferably from 1 to 20 parts by weight, of the modifier in an organic solvent capable of dissolving PPS or capable of partly dissolving PPS at a temperature of from 170° to 300 °C. The organic solvent usually is used in an amount of from 10 to 5000 parts by weight, and preferably of from 200 to 2000 parts by weight, per 100 parts by weight of PPS.

While it is desirable that the organic solvent used is capable of dissolving the starting PPS, organic solvents capable of partly swelling PPS may also be employed. Examples of suitable organic solvents include aromatic solvents, e.g., biphenyl, toluene, and xylene; halogenated aromatic hydrocarbon solvents, e.g., chlorobenzene, dichlorobenzene, and chloronaphthalene; and aprotic polar solvents, e.g., N-methyl-2-pyrrolidone, dimethylimidazolidinone, dimethylacetamide, and sulfolane.

In another embodiment, the carboxyl-containing PPS can be obtained through a reaction in a molten state. For example, 100 parts by weight of PPS and from 0.01 to 20 parts by weight, and preferably from 0.1 to 10 parts by weight, of the modifier are mixed and melt-kneaded in an extruder or a kneading machine at a temperature of from 150° to 350 °C, and preferably from 280° to 340 °C.

In the carboxyl-containing PPS thus prepared, the grafting ratio of the mercapto compound or disulfide compound as a modifier to the PPS skeleton ranges from 0.1 to 10% by weight, and preferably from 0.2 to 5% by weight.

The carboxyl-containing PPS of the present invention has a number average molecular weight (Mn) of $2\times10^3$ or more and a weight average molecular weight (Mw) of $8\times10^3$ or more as determined by gel-permeation chromatography (GPC) using $\alpha$-chloronaphthalene as a solvent and has a melt viscosity of from 100 to 100000 poise as measured at 300 °C and a shear rate of 100 $s^{-1}$.

The carboxyl-containing PPS of the present invention can be blended with polyamide having a polar group, such as nylon 6, nylon 6,6, nylon 6,10, and nylon 12; aromatic polyester, such as polyethylene terephthalate and polybutylene terephthalate; polycarbonate; polyester-polycarbonate; phenoxy resins; maleic anhydride-grafted polypropylene; and the like to provide engineering plastics with excellent mechanical strength, thermal rigidity, and appearance, such as connectors, ignition manifolds, gears, bumpers, and coil sealants.

When the carboxyl-containing PPS of the present invention is blended with unmodified PPE, however, the effect in improving compatibility is insufficient to improve impact resistance. Accordingly, the compatibility between the carboxyl-containing PPS and PPE can be further improved by modifying the blending PPE with a functional group reactive with a carboxyl group, i.e., an epoxy group (1,2-epoxy group), an amino group, or an alcoholic hydroxyl group. This provides a PPS/PPE polymer alloy with improved impact resistance. That is, the present invention provides a resin composition comprising

(A) from 10 to 90% by weight of the carboxyl-containing PPS according to the present invention and

(B) from 10 to 90% by weight of functional PPE selected from the group consisting of

($b_1$) an epoxy-containing PPE,

($b_2$) an alcoholic hydroxyl-containing PPE represented by formula (III):

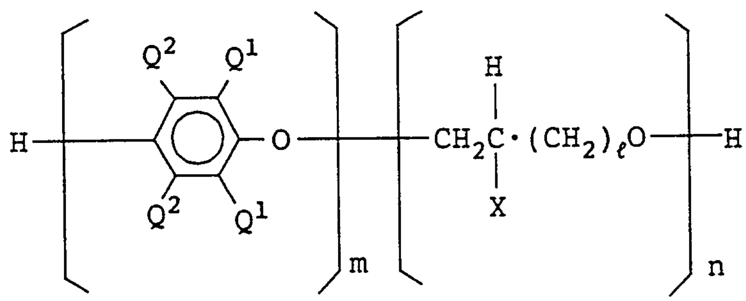

(III)

wherein $Q^1$ represents a halogen atom, a primary or secondary alkyl group, an araliphatic hydrocarbon group, an aminoalkyl group, a halo-hydrocarbon group, a hydrocarbon oxy group, or a halo-hydrocarbon oxy group; $Q^2$ represents a hydrogen atom, a halogen atom, a primary or secondary alkyl group, a halo-hydrocarbon group, or a halo-hydrocarbon oxy group; X represents a hydrogen atom, an alkyl group having from 1 to 8 carbon atoms, or a hydroxyl group; $\ell$ represents a number of from 0 to 8; m represents a number of from 10 to 400; and n represents a number of from 1 to 10,

($b_3$) an alcoholic hydroxyl-containing PPE obtained by reacting PPE with a (meth)acrylate represented by formula (IV):

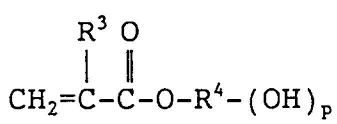

(IV)

wherein $R^3$ represents a hydrogen atom or a methyl group; $R^4$ represents a hydrocarbon group having from 2 to 4 carbon atoms; and p represents 1 or 2,

and

($b_4$) an amino-containing PPE.

Functional PPE (component (B)) can be obtained by reacting 100 parts by weight of PPE with 0.01 to 20 parts by weight, and preferably from 1 to 10 parts by weight, of a functionalizing agent in the presence or absence of an organic solvent capable of dissolving PPE in the presence of a basic catalyst or a radical initiator at a temperature of from 50° to 290 °C. Functional PPE can also be obtained by melt-kneading

PPE and a functionalizing agent at a temperature of from 220° to 340°C.

The starting PPE is a homo- or copolymer having a repeating unit represented by formula (VI):

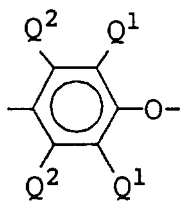

(VI)

wherein $Q^1$ represents a halogen atom, a primary or secondary alkyl group, an araliphatic hydrocarbon group, an aminoalkyl group, a halo-hydrocarbon group, a hydrocarbon oxy group, or a halo-hydrocarbon oxy group; and $Q^2$ represents a hydrogen atom, a halogen atom, a primary or secondary alkyl group, a halo-hydrocarbon group, or a halo-hydrocarbon oxy group.

Examples of suitable primary alkyl groups represented by $Q^1$ or $Q^2$ are methyl, ethyl, n-propyl, n-butyl, n-amyl, isoamyl, 2-methylbutyl, 2,3-dimethylbutyl, 2-, 3- or 4-methylpentyl, and heptyl groups. Examples of suitable secondary alkyl groups represented by $Q^1$ or $Q^2$ are isopropyl, sec-butyl, and 1-ethylpropyl groups. $Q^1$ is preferably an alkyl group or a phenyl group and, particularly, an alkyl group having from 1 to 4 carbon atoms. $Q^1$ is preferably a hydrogen atom.

Specific examples of PPE are poly(2,6-dimethyl-1,4-phenylene)ether, poly(2,6-diethyl-1,4-phenylene)-ether, poly(2,6-dipropyl-1,4-phenylene)ether, poly(2-methyl-6-ethyl-1,4-phenylene)ether, poly(2-methyl-6-propyl-1,4-phenylene)ether,poly(2-ethyl-6-propyl-1,4-phenylene)ether, a 2,6-dimethylphenol/2,3,6-trimethylphenol copolymer, a 2,6-dimethylphenol/2,3,6-triethylphenol copolymer, a 2,6-diethylphenol/2,3,6-trimethylphenol copolymer, a 2,6-dipropylphenol/2,3,6-trimethylphenol copolymer, styrene-grafted poly(2,6-dimethyl-1,4-phenylene)ether, and a styrene-grafted 2,6-dimethylphenol/2,3,6-trimethylphenol copolymer.

Suitable PPE homopolymers include a homopolymer comprising a 2,6-dimethyl-1,4-phenylene ether unit. Suitable phenylene ether copolymers include a random copolymer of 2,6-dimethyl-1,4-phenylene ether units and 2,3,6-trimethyl-1,4-phenylene ether units.

The PPE used in the present invention preferably has a molecular weight providing an intrinsic viscosity of from about 0.2 to about 0.8 dℓ/g in chloroform at 30°C.

PPE is generally prepared by oxidative coupling of the above-mentioned phenylene ether monomer(s). A number of catalyst systems are known for use in oxidative coupling of phenylene ether monomers. Any appropriate catalysts can be used in the present invention without any particular limitation. For example, combinations of at least one heavy metal compound of copper, manganese, cobalt, etc. with various other substances can be used. Further details of appropriate catalysts are disclosed in U.S. Patent 3,306,874.

Epoxy-containing PPE ($b_1$) can be prepared by, for example, Processes (A) to (C) described below.

Process (A) comprises contacting PPE with a compound containing an epoxy group while heating to obtain PPE with an epoxidized terminal group (see JP-A-63-125525).

If the epoxy compound is liquid at the reaction temperature and capable of dissolving PPE, it also serves as a solvent. If the epoxy compound is solid at the reaction temperature or incapable of dissolving PPE, a solvent which is a good solvent for both PPE and the epoxy compound and inert to the reaction, such as aromatic hydrocarbons, e.g., benzene and toluene; halogenated hydrocarbons, e.g., chloroform; or halogenated aromatic hydrocarbons, e.g., chlorobenzene and dichlorobenzene, is used for the reaction.

The epoxy compounds to be used preferably include those having one halogenated terminal group and those having an epoxy group at both terminal ends. Suitable examples of the former compounds are epichlorohydrin, epibromohydrin, and 2-methylepichlorohydrin. Suitable examples of the latter compounds are 2,2-bis(4-glycidylphenyl ether)propane, bisphenol A diglycidyl ether, bisphenol F diglycidyl ether, and polyglycidyl ether of a novolak resin.

The epoxy compound is used in an amount of at least 1.0 mol, and preferably at least 2.0 mols, of epoxy group per phenolic hydroxyl end group of PPE.

The basic catalyst which can be used for terminal epoxidation is not particularly limited. Suitable basic catalysts include alkali metal hydroxides, e.g., sodium hydroxide and potassium hydroxide, and alcoholates, e.g., sodium methoxide and sodium ethoxide. The basic catalyst is used in an amount of at least 1.0 equivalent, preferably at least 1.2 equivalents, and more preferably at least 1.5 equivalents, based on the epoxy compound.

The epoxidation reaction is suitably carried out at a temperature of from about 80° to about 120°C for a period usually of from about 1 to about 8 hours. After the reaction, the reaction mixture is cooled and poured into a poor solvent for PPE, such as methanol. The precipitate thus formed is collected by filtration, washed with water and methanol to remove the unreacted epoxy compound or alkaline compounds, followed by filtration. The solid collected is dried at 80° to 110°C under reduced pressure or normal pressure to recover PPE with its terminal group epoxidized.

Process (B) comprises grafting a (meth)acrylate represented by formula (VII):

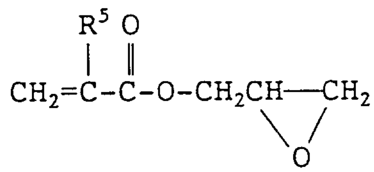

(VII)

wherein $R^5$ represents a hydrogen atom or a methyl group, e.g., glycidyl methacrylate or glycidyl acrylate, to PPE in a dissolved or molten state to prepare epoxy-containing PPE with its polymeric main chain modified with a structural unit represented by formula (VIII):

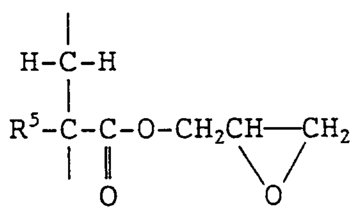

(VIII)

wherein $R^5$ is as defined above. For details, reference is made to JP-A-1-259060.

Process (C) comprises grafting a (meth)acrylamide represented by formula (IX):

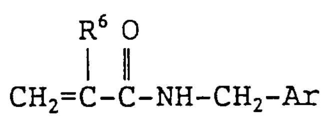

(IX)

wherein $R^6$ represents a hydrogen atom or a methyl group; and Ar represents an aryl group having from 6 to 10 carbon atoms and containing at least one glycidyloxy group, e.g., N-[4-(2,3-epoxypropoxy)-3,5-dimethylphenylmethyl]acrylamide, to PPE in a dissolved or molten state to prepare epoxy-containing PPE with its main chain modified with a structural formula represented by formula (X):

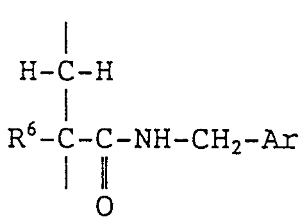

(X)

wherein $R^6$ and Ar are as defined above.

Alcoholic hydroxyl-containing PPE ($b_2$ and $b_3$) can be, respectively, prepared by, for example, Processes (D) and (E) described below.

Process (D) comprises reacting PPE with glycidol represented by formula (XI):

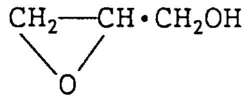 (XI)

to prepare alcoholic hydroxyl-containing PPE represented by formula (III'):

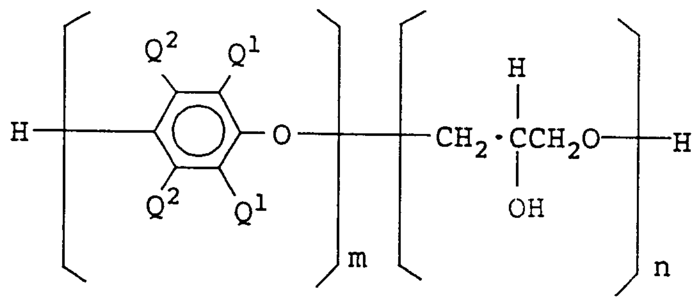 (III')

wherein $Q^1$, $Q^2$, m, and n are as defined above. For details, see JP-A-3-250025 corresponding to U.S. Patent 5,128,421.

Process (E) comprises grafting a (meth)acrylate represented by formula (IV):

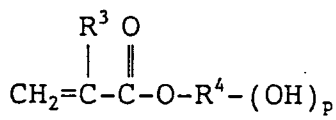 (IV)

wherein $R^3$ represents a hydrogen atom or a methyl group; $R^4$ represents a hydrocarbon group having from 2 to 4 carbon atoms; and p represents 1 or 2,
to PPE in a dissolved or molten state to prepare alcoholic hydroxyl-containing PPE (see JP-A-1-259060). Specific examples of the (meth)acrylate of formula (IV) are 2-hydroxypropyl methacrylate, glycerol monomethacrylate, 2-hydroxyethyl methacrylate, 2-hydroxyethyl acrylate, 2-hydroxypropyl acrylate, or 2-hydroxybutyl acrylate.

Amino-containing PPE ($b_4$) can be prepared by Processes (F) to (I) described below (see EP-A-476619).

Process (F) comprises reacting PPE with a halogenated alkylamine represented by formula (XII):

$X\text{-}R^7\text{-}NH_2$ (XII)

wherein X represents a halogen atom; and $R^7$ represents an aliphatic hydrocarbon group having from 1 to 32 carbon atoms, an aromatic hydrocarbon group, or an aryl group, to prepare amino-containing PPE represented by formula (XIII):

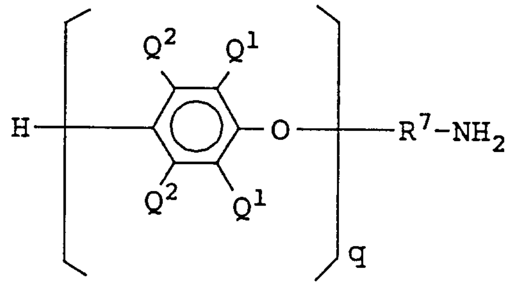 (XIII)

wherein $Q^1$, $Q^2$, and $R^7$ are as defined above; and q represents a number of from 10 to 450.

Examples of the functionalizing agent of formula (XII) include halogenated primary amines, e.g., 2-chloroethylamine, 2-bromoethylamine, 3-chloropropylamine, and 3-bromopropylamine, and hydrochlorides or hydrobromides thereof.

Process (G) comprises reacting PPE with a halogenated heterocyclic amino compound represented by formula (XIV):

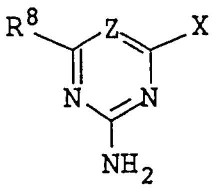

(XIV)

wherein $R^8$ represents an alkyl group having from 1 to 12 carbon atoms, an aryl group having from 6 to 12 carbon atoms, a halogen atom, a hydroxyl group, or an amino group; X represents a halogen atom; and Z represents a carbon atom or a nitrogen atom,
to prepare amino-containing PPE represented by formula (XV):

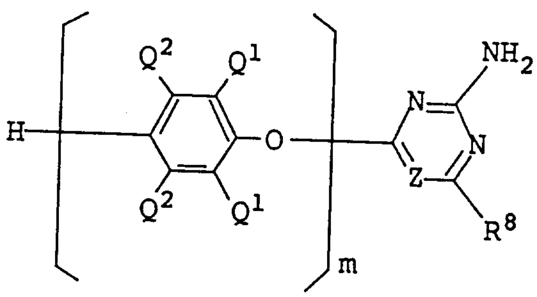

(XV)

wherein $R^8$, Z, $Q^1$, $Q^2$, and m are as defined above.

Examples of the functionalizing agent of formula (XIV) are 1-chloro-2,3-diaminotriazine, 2-chloro-4,6-diamino-1,3,5-triazine, 6-chloro-2,4-diaminopyrimidine, 2-amino-4-chloro-6-hydroxypyrimidine,2-amino-4-chloro-6-methylpyrimidine, and 2-amino-4,6-dichloropyrimidine.

Process (H) comprises reacting epoxy-terminated PPE with a polyamine compound represented by formula (XVI):

$R^9 \{ NH_2 )_r$ (XVI)

wherein $R^9$ represents an aliphatic hydrocarbon group, or an aryl group; and r represents a number of from 2 to 10, to prepare amino-containing PPE represented by formula (XVII):

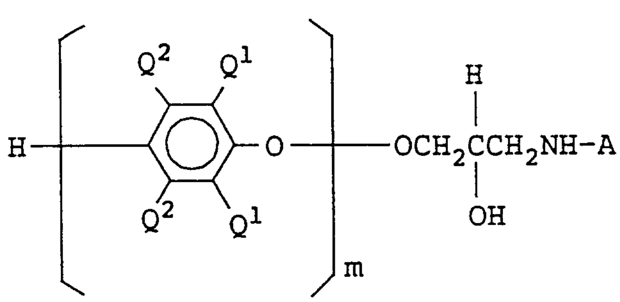

(XVII)

wherein $Q^1$, $Q^2$, and m are as defined above; and A represents a polyamine compound residue (see JP-A-4-80231).

Examples of the polyamine compound of formula (XVI) are triethylenetetramine, tetraethylenepentamine, diethylenetriamine, ethylenediamine, 1,10-diaminodecane, 1,6-diaminohexane, 3,3'-diaminodipropylamine, N,N'-bis(2-aminoethyl)-1,3-propanediamine, tris(2-aminoethyl)amine, and 4,4'-diaminodiphenylmethane.

Process (I) comprises reacting PPE with a polyisocyanate represented by formula (XVIII):

$R^{10}\!\left(N=C=O\right)_s$ (XVIII)

wherein $R^{10}$ represents a di- or higher valent aliphatic, aromatic or araliphatic hydrocarbon group having from 1 to 32 carbon atoms; and s represents a number of from 2 to 6, to prepare amino-containing PPE represented by formula (XIX):

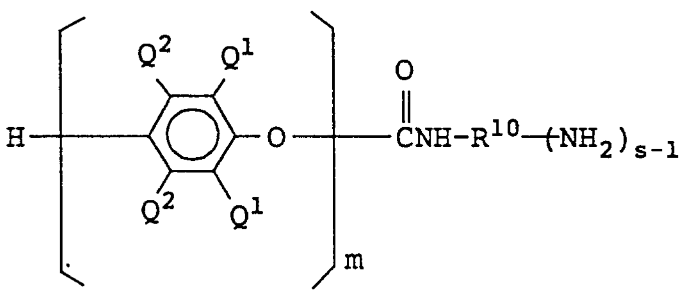

(XIX)

wherein $Q^1$, $Q^2$, $R^{10}$, m, and s are as defined above, (see JP-A-4-68024).

Examples of the polyisocyanate of formula (XVIII) are toluene-2,4-diisocyanate, toluene-2,6-diisocyanate, m-xylene diisocyanate, hexamethylene diisocyanate, 4,4'-diphenylmethane diisocyanate, and 4,4'-diisocyanate-3,3'-dimethyldiphenylmethane.

For achieving reaction activity and thermal stability, the amino-containing PPE species represented by formula (XIII) is preferred.

If desired, the functional PPE (component (B)) can be used in combination with unmodified PPE, e.g., poly(2,6-dimethyl-1,4-phenylene ether) or poly(2,6-diethyl-1,4-phenylene)ether. The proportion of unmodified PPE is up to 80% by weight based on the total weight of component (B).

If desired, the resin composition comprising carboxyl-containing PPS and other resins can further contain additives, such as antioxidants, weathering agents, nucleating agents, flame retardants, plasticizers, and fluidity improving agents. Addition of organic or inorganic fillers or reinforcing materials, especially glass fiber, mica, talc, wollastonite, potassium titanate, calcium carbonate, or silica is effective to improve rigidity, heat resistance, and dimensional stability of the composition. To improve practical utility, known colorants and dispersing agents therefor can also be employed.

Furthermore, addition of an impact modifier to the resin composition provides further improvement in impact strength of molded articles. Suitable impact modifiers include a styrene-butadiene copolymer rubber or a hydrogenation product thereof; an ethylene-propylene copolymer rubber, an ethylene-propylene-diene copolymer rubber, or a modification product of these polyolefins, e.g., an $\alpha,\beta$-unsaturated carboxylic acid anhydride-modified polymer and a glycidyl ester- or unsaturated glycidyl ether-modified polymer; a copolymer comprising an unsaturated epoxy compound and ethylene; a copolymer comprising an unsaturated epoxy compound, ethylene, and an ethylenically unsaturated compound. These impact modifiers can be used either individually or in combination of two or more. The amount of the impact modifier to be compounded varies depending on the desired physical properties. For example, for the purpose of improving balance between rigidity and impact strength of a molded article, an amount of from 5 to 30% by weight based on the weight of the total resin content is used.

Considering the balance between mechanical strength and organic solvent resistance, a mixing ratio of carboxyl-containing PPS (A) to functional PPE (B) should be from 10:90 to 90:10, preferably from 20:80 to 80:20, and more preferably from 30:70 to 70:30, by weight. If component (A) is present in an amount less than 10% by weight, the composition has poor solvent resistance. If it exceeds 90% by weight, sufficient thermal rigidity cannot be obtained.

The thermoplastic resin composition of the present invention can be obtained by melt-kneading the above-described components according to kneading techniques commonly employed for general thermoplastic resins. For example, powdered or granular components are uniformly dry blended, if desired,

together with necessary additives in a Henschel mixer, a ribbon blender, a twin-cylinder mixer, etc., and the resulting blend is melt-kneaded in a single-screw extruder, a multi-screw extruder, a roll, a Banbury mixer, etc.

Methods of molding the thermoplastic resin composition of the present invention are not particularly restricted, and any molding techniques commonly employed for thermoplastic resins, such as injection molding, blow molding, extrusion molding, thermoforming, and press molding, can be employed.

The present invention is now illustrated in greater detail with reference to Preparation Examples, Examples, and Comparative Examples, but it should be understood that the present invention is not limited thereto. All the parts and percents are by weight unless otherwise indicated.

Molecular weights of PPS were determined by very-high-temperature GPC (hereinafter abbreviated as VHT-GPC) according to the following conditions:

| | |
|---|---|
| Chromatograph: | "VHT-GPC 7000" manufactured by Senshu Kagaku. |
| Column: | Two columns ("Shodex AT-80M" manufactured by Showa Denko K.K.) were connected in series. |
| Column Temperature: | 210 °C |
| Mobile Phase: | α-Chloronaphthalene; flow rate: 1 mℓ/min |
| Detection Wavelength: | UV 360 nm |
| Standard: | Polystyrene |

The following resin materials were used in the Examples, Preparation Examples, and Comparative Examples.

PPS:

1. Tohprene T-7 (trade name of PPS produced by Tohprene Co., Ltd.); Mn: 2950; Mw: 44900 (hereinafter referred to as PPS-1).
2. Tohprene T-1 (trade name of PPS produced by Tohprene Co., Ltd.); Mn: 2010; Mw: 19800 (hereinafter referred to as PPS-2).

PPE:

Poly(2,6-dimethyl-1,4-phenylene ether) produced by Nippon Polyether K.K. whose intrinsic viscosity (30 °C, chloroform) was 0.3 dℓ/g.

Impact Modifier:

1. Partially hydrogenated styrene-butadiene-styrene block copolymer ("Kraton G-1651" produced by Shell Chemical Co., Ltd.) (hereinafter abbreviated as SEBS).
2. Ethylene-vinyl acetate-glycidyl methacrylate copolymer ("Bondfast BF-E" produced by Sumitomo Chemical Co., Ltd.) (hereinafter abbreviated as EVG).

EXAMPLES 1 AND 2

A hundred parts of PPS-1 and 1 part of thiomalic acid or 4,4'-dithiodi(n-butyric acid) were uniformly mixed and melt-kneaded in a twin-screw extruder at 310 °C to obtain strands, which were then pelletized. The resulting modified PPS was designated Modified PPS-1-1 or Modified PPS-1-2, respectively. No substantial increase in the melt flow rate (MFR) due to modification was observed. As a result of VHT-GPC analysis, the molecular weight of PPS-1 or PPS-2 showed no substantial change after modification.

A 0.5 g portion of Modified PPS-1-1 or Modified PPS-1-2 was dissolved in 20 mℓ of α-chloronaphthalene at 220 °C. After cooling, 30 mℓ of acetone was added thereto, and the precipitated polymer was collected by filtration, dried, and press molded to obtain a sheet for FT-IR analysis. As a result, an absorption assigned to the ketone of the carboxyl group was observed at the wavelength shown in Table 1 (1730 $cm^{-1}$ or 1735 $cm^{-1}$).

The grafting ratio of thiomalic acid or 4,4'-dithiodi(n-butyric acid) in Modified PPS-1-1 or Modified PPS-1-2 was found to be 0.9% or 0.6%, respectively, as calculated from a calibration curve prepared from the intensity ratio of the infrared absorption peak assigned to the carboxyl group to the peak at 1910 $cm^{-1}$ of an internal standard.

COMPARATIVE EXAMPLE 1

PPS-1 was modified in the same manner as in Example 1, except for using 4,4'-bis(4-carboxyphthalimidophenyl) disulfide as a modifier. The resulting carboxyl-containing PPS had an increased MFR and provided brittle strands. As a result of VHT-GPC, the carboxyl-containing PPS had an Mn of 1940 and an Mw of 16,900.

EXAMPLES 3 TO 6

A hundred parts of PPS-1 and 3 parts of each modifier shown in Table 1 were mixed and melt-kneading in a laboratory plastomill at 290°C and 180 rpm for 5 minutes to obtain carboxyl-containing PPS. The results of measurements are shown in Table 1.

TABLE 1

| Example No. | Modifier | IR Absorption Wavelength Assigned to COOH ($cm^{-1}$) | Grafting Ratio (wt%) | Molecular Weight of COOH-Containing PPS* | | Melt Viscosity** (poise) |
|---|---|---|---|---|---|---|
| | | | | Mn | Mw | |
| Example 1 | Thiomalic acid | 1730 | 0.9 | 2840 | 54400 | $3.4\times10^3$ |
| Example 2 | 4,4'-Dithiodi(n-butyric acid) | 1735 | 0.6 | 2940 | 82700 | $4.0\times10^3$ |
| Comparative Example 1 | 4,4'-Bis(4-carboxy-phthalimidophenyl)-disulfide | 1700 | - | 1940 | 16900 | $4.0\times10^2$ |
| Example 3 | Dithiodiglycolic acid | 1720 | 2.0 | 3050 | 72300 | $3.6\times10^3$ |
| Example 4 | Dithiodipropionic acid | 1740 | 2.0 | 2720 | 48300 | $3.3\times10^3$ |
| Example 5 | 3-Mercaptopropionic acid | 1740 | 2.2 | 2980 | 54600 | $3.4\times10^3$ |
| Example 6 | 2-Ethylhexyl 3-mercaptopropionic acid | 1733 | 2.4 | 3000 | 55000 | $3.4\times10^3$ |

Note: * : VHT-GPC, reduced to polystyrene

** : 300°C, shear rate: 100 $s^{-1}$

## EXAMPLES 7 TO 8

A mixture of 5 g of PPS-2 and 0.5 g of each modifier shown in Table 2 below was heated together with 100 mℓ of each organic solvent shown in Table 2 at the temperature shown in Table 2 for 7 hours. The

reaction mixture was cooled, and the precipitated polymer was collected by filtration, washed with methanol, and dried at 100 ° C under reduced pressure. As a result of FT-IR analysis, an absorption assigned to the ketone of the carboxyl group was observed at the wavelength shown in Table 2. As a result of VHT-GPC analysis, the molecular weight of PPS-2 showed no substantial change after modification.

TABLE 2

| Example No. | Modifier | Reaction Solvent | Reaction Temp. (°C) | Yield (g) | IR Absorption Wavelength Assigned to COOH ($cm^{-1}$) | Grafting Ratio (wt%) | Molecular Weight of COOH-Containing PPS* | |
|---|---|---|---|---|---|---|---|---|
| | | | | | | | Mn | Mw |
| Example 7 | Thiomalic acid | N-methyl-2-pyrrolidone | 195 | 4.1 | 1730 | 4.4 | 2300 | 21000 |
| Example 8 | 4,4'-Dithiodi(n-butyric acid) | 1-chloronaphthalene | 215 | 4.8 | 1735 | 3.1 | 1980 | 22500 |

Note: *: VHT-GPC, reduced to polystyrene

COMPARATIVE EXAMPLE 2

Methacrylic acid-modified PPS was prepared in the same manner as in Example 1, except for replacing thiomalic acid with methacrylic acid. As a result of an FT-IR analysis, an absorption assigned to the ketone of the carboxyl group was observed at 1740 $cm^{-1}$.

PREPARATION EXAMPLE 1

Epoxy-Containing PPE (Modified PPE-1)

To 350 g of PPE ([$\eta$]=0.3 dℓ/g) was added 5 ℓ of epichlorohydrin, and the mixture was stirred at 100°C in a nitrogen atmosphere to form a solution. To the solution were added 70 g of sodium ethoxide and 300 mℓ of methanol over a 20 minutes period. After the mixture had been stirred at 100°C for 4 hours, the reaction mixture was cooled to room temperature, and 10 ℓ of methanol was added thereto to precipitate epoxy-terminated PPE.

The product collected by filtration was washed successive with 10 ℓ of methanol, 10 ℓ x 2 portions of pure water, and 10 ℓ of methanol and dried at 80°C under reduced pressure to recover 351 g of epoxy-containing PPE (designated Modified PPE-1).

The reaction rate of the terminal phenolic hydroxyl groups of the starting PPE was found to be 99% as calculated from the terminal phenolic hydroxyl group contents before and after the reaction according to the method described in Journal of Applied Polymer Science: Applied Polymer Symposium, Vol. 34, pp. 103-117 (1978).

PREPARATION EXAMPLE 2

Epoxy-Containing PPE (Modified PPE-2)

To 100 parts of PPE ([$\eta$]=0.3 dℓ/g) was added 1 part of glycidyl methacrylate, followed by uniformly mixing. The mixture was melt-kneaded in a twin-screw extruder at 260°C to obtain strands, which were then pelletized.

The resulting epoxy-containing PPE (designated Modified PPE-2) showed an IR absorption assigned to the carbonyl group in the vicinity of 1720 $cm^{-1}$.

PREPARATION EXAMPLE 3

Epoxy-Containing PPE (Modified PPE-3)

To 100 parts of PPE ([$\eta$)=0.3 dℓ/g) was added 1 part of N-[4-(2,3-epoxypropoxy)-3,5-dimethylphenylmethyl]acrylamide (tradename "Kaneka AXE" produced by Kanegafuchi Chemical Industry Co., Ltd.) followed by uniformly mixing. The mixture was melt-kneaded in a twin-screw extruder at 260°C to obtain strands, which were then pelletized.

The resulting epoxy-containing PPE (designated Modified PPE-3) showed an FT-IR absorption assigned to the carbonyl group in the vicinity of 1685 $cm^{-1}$.

PREPARATION EXAMPLE 4

Alcoholic Hydroxyl-Containing PPE (Modified PPE-4)

In 500 g of PPE ([$\eta$]=0.3 dℓ/g) 2 ℓ of xylene were completely dissolved with stirring at 80°C in a nitrogen atmosphere. To the solution were added 15 g of sodium ethoxide as a catalyst and 100 mℓ of methanol, and 100 g of glycidol was then added thereto dropwise over 30 minutes, followed by stirring at 80°C for 2 hours. The reaction mixture was poured into 10 ℓ of methanol. The precipitate thus formed was collected by filtration, washed twice with methanol, and dried at 80°C under reduced pressure to recover alcoholic hydroxyl-containing PPE (designated Modified PPE-4).

Modified PPE-4 showed an IR absorption assigned to the alcoholic hydroxyl group in the vicinity of 3380 $cm^{-1}$. The reaction rate of the terminal phenolic hydroxyl groups of the starting PPE was found to be 90%. Further, as a result of a proton NMR analysis, it was found that 2.5 molecules of glycidol had been added to one PPE molecule in average.

PREPARATION EXAMPLE 5

Alcoholic Hydroxy-Containing PPE (Modified PPE-5)

To 100 parts of PPE ([η]=0.3 dℓ/g) was added 1 part of 2-hydroxyethyl methacrylate, followed by uniformly mixing. The mixture was melt-kneaded in a twin-screw extruder at 260°C to obtain strands, which were then pelletized.

As a result of an IR analysis, the resulting alcoholic hydroxyl-containing PPE (designated Modified PPE-5) showed an absorption assigned to the alcoholic hydroxyl group in the vicinity of 3570 $cm^{-1}$ and an absorption assigned to the carbonyl group in the vicinity of 1740 $cm^{-1}$.

PREPARATION EXAMPLE 6

Amino-Containing PPE (Modified PPE-6)

In a reactor were charged 400 g of PPE and 4 ℓ of toluene, and the mixture was heated with stirring to dissolve the PPE. To the solution were added 100 g of a 50% sodium hydroxide aqueous solution as a basic catalyst and 20 g of trioctylmethylammonium chloride as a phase transfer catalyst. The mixture was heated to 90°C, at which it was stirred for 30 minutes. An aqueous solution of 40 g of 3-chloropropylamine (functionalizing agent) was then added thereto over 15 minutes, followed by heating with stirring for 7 hours. The reaction mixture was poured into 15 ℓ of methanol. The precipitate thus formed was collected by filtration, washed successive with 10 ℓ of water and 10 ℓ of methanol, and dried at 80°C under reduced pressure to recover amino-containing PPE (designated Modified PPE-6) in a yield of 100%.

The reaction rate of the terminal phenolic hydroxyl groups of the starting PPE was 100%. A proton NMR analysis revealed that 1 molecule of the halogenated amine compound was found to have been added to one molecule of PPE. As a result of an FT-IR analysis of Modified PPE-6 in a carbon tetrachloride solution, an absorption assigned to the amino group was observed at 3380 $cm^{-1}$.

EXAMPLE 9

Seventy parts of Modified PPS-1-1 prepared in Example 1 and 30 parts of Modified PPE-1 prepared in Preparation Example 1 were dry blended and melt-kneaded in a laboratory plastomill (manufactured by Toyo Seiki Seisakusho) at 310°C and at 180 rpm for 5 minutes. The blend was ground in a mill to granule. The resulting granular compound was press molded at 310°C by means of a compression molding press (manufactured by Toyo Seiki Seisakusho) to prepare a 2 mm thick sheet. The sheet was heated in a hot air drier at 120°C for 4 hours to cause the PPS resin to sufficiently crystallize. The sheet was then cut to prescribed sizes to prepare test specimens for evaluation of various physical properties. Before evaluation, the specimens were preserved in a desiccator for 2 days.

PPS-1-1 used above had previously been dried in vacuo at 100°C for 24 hours before use.

Physical properties and the appearance of the specimens were measured and evaluated according to the following test methods. The results obtained are shown in Table 3 below.

1) Flexural Rigidity:

The specimen was subjected to a flexural rigidity test at 23°C in accordance with JIS K7106.

2) Izod Impact Strength:

Izod impact strength at 23°C was measured on three thicknesses of a 2 mm thick specimen fixed together by use of an Izod impact tester according to JIS K7110. 3) Dispersion State:

A cut area of the specimen was observed under a scanning electron micrograph ("S-2400" manufactured by Hitachi, Ltd.) The micrograph obtained (1000 or 5000× magnification) was analyzed with an image analyzer ("SPICCA II" manufactured by Nippon Abionics Co., Ltd.) to obtain a number-average dispersed particle diameter Dn according to equation:

$$Dn = \Sigma nidi/\Sigma ni$$

4) Appearance of Molded Article:

The appearance of the specimen was observed and rated "good", "medium" (poorer than "good" but still acceptable for practical use), or "bad" (having a rough surface and unsuitable for practical use).

EXAMPLES 10 TO 18 AND COMPARATIVE EXAMPLES 3 TO 7

A resin composition shown in Tables 3 or 4 was prepared and evaluated in the same manner as in Example 9. The results obtained are also shown in Tables 3 and 4.

TABLE 3

| | Ex. 9 | Ex. 10 | Ex. 11 | Ex. 12 | Comp. Ex. 3 | Comp. Ex. 4 | Comp. Ex. 5 |
|---|---|---|---|---|---|---|---|
| Composition (part): | | | | | | | |
| Modified PPS-1-1 | 70 | - | 70 | 70 | - | - | - |
| Modified PPS-1-2 | - | 70 | - | - | - | - | - |
| Methacrylic acid-modified PPS | - | - | - | - | - | 70 | - |
| PPS | - | - | - | - | 70 | - | 70 |
| Modified PPE-1 | 30 | 30 | - | - | 30 | - | - |
| Modified PPE-2 | - | - | 30 | - | - | 30 | - |
| Modified PPE-3 | - | - | - | 30 | - | - | - |
| PPE | - | - | - | - | - | - | 30 |
| Properties: | | | | | | | |
| Flexural Rigidity ($kgf/cm^2$) | 26300 | 26500 | 26100 | 26200 | 26000 | 25900 | 26900 |
| Izod Impact Strength ($kgf \cdot cm/cm^2$) | 2.5 | 2.5 | 2.5 | 2.5 | 1.8 | 1.9 | 1.6 |
| Dispersed Particle Diameter (μm) | 0.4 | 0.5 | 0.7 | 0.8 | 2.2 | 1.7 | 2.1 |
| Appearance of Molded Article | good | good | good | good | medium | good | medium |

TABLE 4

| | Ex. 13 | Ex. 14 | Comp. Ex. 6 | Ex. 15 | Ex. 16 | Ex. 17 | Comp. Ex. 7 | Ex. 18 |
|---|---|---|---|---|---|---|---|---|
| Composition (part): | | | | | | | | |
| Modified PPS-1-1 | 50 | - | - | 30 | - | - | - | 60 |
| Modified PPS-1-2 | - | 50 | - | - | 30 | - | - | - |
| 2,2'-Dithiodi(benzoic acid)-modified PPS | - | - | - | - | - | 30 | - | - |
| Methacrylic acid-modified PPS | - | - | - | - | - | - | - | - |
| PPS | - | - | 50 | - | - | - | 30 | - |
| Modified PPE-1 | 50 | 50 | - | 70 | 70 | 70 | - | 30 |
| Modified PPE-2 | - | - | - | - | - | - | - | - |
| Modified PPE-3 | - | - | - | - | - | - | - | - |
| PPE | - | - | 50 | - | - | - | 70 | 10 |
| Properties: | | | | | | | | |
| Flexural Rigidity ($kgf/cm^2$) | 25600 | 25500 | 25500 | 23300 | 23600 | 23500 | 23700 | 25600 |
| Izod Impact Strength ($kgf \cdot cm/cm^2$) | 2.5 | 2.4 | 1.7 | 2.4 | 2.3 | 2.3 | 1.9 | 2.3 |
| Dispersed Particle Diameter (μm) | 1.5 | 1.7 | 3.5 | 1.0 | 1.2 | 1.5 | 2.9 | 2.2 |
| Appearance of Molded Article | good | good | medium | good | good | good | medium | good |

## EXAMPLES 19 AND 20

A resin composition comprising 50 parts of Modified PPS-1-1 or Modified PPS-1-2 and 50 parts of Modified PPE-4 was prepared and evaluated in the same manner as in Example 9. The results of evaluation

are shown in Table 5 below.

COMPARATIVE EXAMPLE 8

A resin composition comprising 50 parts of PPS and 50 parts of PPE was prepared and evaluated in the same manner as in Example 9. The results of evaluation are shown in Table 5.

EXAMPLES 21 AND 22

A resin composition comprising 70 parts of Modified PPS-1-1 or Modified PPS-1-2 and 30 parts of Modified PPE-4 was prepared and evaluated in the same manner as in Example 9. The results of evaluation are shown in Table 5.

COMPARATIVE EXAMPLES 9 AND 10

A resin composition was prepared in the same manner as in Example 21, except for replacing Modified PPE-4 with PPE. The results of evaluation are shown in Table 5.

COMPARATIVE EXAMPLE 11

A resin composition was prepared in the same manner as in Example 21, except for replacing Modified PPS-1-1 with PPS. The results of evaluation are shown in Table 5.

COMPARATIVE EXAMPLE 12

A resin composition comprising 70 parts of PPS and 30 parts of PPE was prepared and evaluated in the same manner as in Example 9. The results of evaluation are shown in Table 5.

EXAMPLES 23 AND 24

A resin composition comprising 30 parts of Modified PPS-1-1 or Modified PPS-1-2 and 70 parts of PPE-4 was evaluated in the same manner as in Example 9. The results of evaluation are shown in Table 6 below.

COMPARATIVE EXAMPLE 13

A resin composition comprising 30 parts of PPS and 70 parts of PPE was prepared and evaluated in the same manner as in Example 9. The results of evaluation are shown in Table 6.

EXAMPLE 25

A resin composition comprising 60 parts of Modified PPS-1-1, 30 parts of PPE-4, and 10 parts of PPE was prepared and evaluated in the same manner as in Example 9. The results of evaluation are shown in Table 6.

EXAMPLE 26

A resin composition comprising 70 parts of Modified PPS-1-1 and 30 parts of PPE-5 was prepared and evaluated in the same manner as in Example 9. The results of evaluation are shown in Table 6.

COMPARATIVE EXAMPLE 14

A resin composition comprising 70 parts of methacrylic acid-modified PPS prepared in Comparative Example 2 and 30 parts of PPE-5 was prepared and evaluated in the same manner as in Example 9. The results of evaluation are shown in Table 6.

TABLE 5

| | Ex. 19 | Ex. 20 | Comp. Ex. 8 | Ex. 21 | Ex. 22 | Comp. Ex. 9 | Comp. Ex. 10 | Comp. Ex. 11 | Comp. Ex. 12 |
|---|---|---|---|---|---|---|---|---|---|
| Composition (part): | | | | | | | | | |
| Modified PPS-1-1 | 50 | - | - | 70 | - | 70 | - | - | - |
| Modified PPS-1-2 | - | 50 | - | - | 70 | - | 70 | - | - |
| Methacrylic acid-modified PPS | - | - | - | - | - | - | - | - | - |
| PPS | - | - | 50 | - | - | - | - | 70 | 70 |
| Modified PPE-4 | 50 | 50 | - | 30 | 30 | - | - | 30 | - |
| Modified PPE-5 | - | - | - | - | - | - | - | - | - |
| PPE | - | - | 50 | - | - | 30 | 30 | - | 30 |
| Properties: | | | | | | | | | |
| Flexural Rigidity ($kgf/cm^2$) | 25300 | 25700 | 25500 | 25600 | 26200 | 25800 | 25900 | 23600 | 26900 |
| Izod Impact Strength ($kgf \cdot cm/cm^2$) | 2.3 | 2.3 | 1.7 | 2.6 | 2.6 | 2.0 | 2.0 | 2.1 | 1.6 |
| Number Average Particle Size (μm) | 1.4 | 1.3 | 3.5 | 0.7 | 1.0 | 1.9 | 2.0 | 2.0 | 2.1 |
| Appearance of Molded Article | good | good | medium | good | good | medium | medium | medium | medium |

TABLE 6

| | Ex. 23 | Ex. 24 | Comp. Ex. 13 | Ex. 25 | Ex. 26 | Comp. Ex. 14 |
|---|---|---|---|---|---|---|
| Composition (part): | | | | | | |
| Modified PPS-1-1 | 30 | - | - | 60 | 70 | - |
| Modified PPS-1-2 | - | 30 | - | - | - | - |
| Methacrylic acid-modified PPS | - | - | - | - | - | 70 |
| PPS | - | - | 30 | - | - | - |
| Modified PPE-4 | 70 | 70 | - | 30 | - | - |
| Modified PPE-5 | - | - | - | - | 30 | 30 |
| PPE | - | - | 70 | 10 | - | - |
| Properties: | | | | | | |
| Flexural Rigidity ($kgf/cm^2$) | 23500 | 23500 | 23700 | 23200 | 25700 | 25800 |
| Izod Impact Strength ($kgf \cdot cm/cm^2$) | 2.5 | 2.4 | 1.9 | 2.4 | 2.5 | 1.9 |
| Number Average Particle Size (μm) | 0.3 | 0.4 | 2.9 | 0.9 | 1.2 | 2.3 |
| Appearance of Molded Article | good | good | medium | good | good | medium |

## EXAMPLE 27

A resin composition comprising 70 parts of PPS-1-1 and 30 parts of PPE-6 obtained in Preparation Example 6 was prepared and evaluated in the same manner as in Example 9. The results of evaluation are

shown in Table 7 below.

EXAMPLES 28 TO 32 AND COMPARATIVE EXAMPLES 15 AND 16

A resin composition shown in Tables 7 or 8 was prepared and evaluated in the same manner as in Example 9. The results obtained are shown in the Tables.

TABLE 7

| | Example 27 | Example 28 | Comparative Example 15 | Comparative Example 16 |
|---|---|---|---|---|
| Composition (part): | | | | |
| Modified PPS-1-1 | 70 | - | 70 | - |
| Modified PPS-1-2 | - | 70 | - | - |
| PPS | - | - | - | 70 |
| Modified PPE-6 | 30 | 30 | - | 30 |
| PPE | - | - | 30 | - |
| Properties: | | | | |
| Flexural Rigidity ($kgf/cm^2$) | 26700 | 27200 | 25900 | 26100 |
| Izod Impact Strength ($kgf \cdot cm/cm^2$) | 2.5 | 2.4 | 1.8 | 1.8 |
| Dispersed Particle Diameter (μm) | 0.5 | 0.7 | 1.9 | 1.5 |
| Appearance of Molded Article | good | good | good | good |

TABLE 8

| | Example 29 | Example 30 | Example 31 | Example 32 |
|---|---|---|---|---|
| Composition (part): | | | | |
| Modified PPS-1-1 | 50 | - | 30 | 60 |
| Modified PPS-1-2 | - | 50 | - | - |
| PPS | - | - | - | - |
| Modified PPE-6 | 50 | 50 | 70 | 30 |
| PPE | - | - | - | 10 |
| Properties: | | | | |
| Flexural Rigidity ($kgf/cm^2$) | 25400 | 25300 | 23600 | 25500 |
| Izod Impact Strength ($kgf \cdot cm/cm^2$) | 2.4 | 2.3 | 2.4 | 2.3 |
| Dispersed Particle Diameter (μm) | 1.8 | 2.0 | 1.3 | 2.1 |
| Appearance of Molded Article | good | good | good | good |

EXAMPLES 33 AND 34

A resin composition comprising 70 parts of Modified PPS-1-1, 30 parts of Modified PPE-3, and 30 parts of SEBS or EVG was prepared and evaluated in the same manner as in Example 9. The results of evaluation are shown in Table 9 below.

TABLE 9

| | Example 33 | Example 34 |
|---|---|---|
| Composition (part): | | |
| Modified PPS-1-1 | 70 | 70 |
| Modified PPE-3 | 30 | 30 |
| SEBS | 9 | - |
| EVG | - | 9 |
| Properties: | | |
| Flexural Rigidity ($kgf/cm^2$) | 22500 | 20800 |
| Izod Impact Strength ($kgf \cdot cm/cm^2$) | 5.3 | 4.9 |
| Dispersed Particle Diameter (μm) | 3.2 | 2.6 |
| Appearance of Molded Article | good | good |

While the invention has been described in detail and with reference to specific examples thereof, it will be apparent to one skilled in the art that various changes and modifications can be made therein without departing from the spirit and scope thereof.

## Claims

1. A process for producing carboxyl-containing polyphenylene sulfide comprising reacting polyphenylene sulfide with a modifier selected from the group consisting of a mercapto compound represented by formula (I):

   $HS\text{-}R^1\text{-}COOR^2$ (I)

   wherein $R^1$ represents an aliphatic or alicyclic group having from 1 to 10 carbon atoms; and $R^2$ represents a hydrogen atom, a hydrocarbon group having from 1 to 10 carbon atoms, or an alkali metal atom,
   and a disulfide compound represented by formula (II):

   $R^2OOC\text{-}R^1\text{-}S\text{-}S\text{-}R^1\text{-}COOR^2$ (II)

   wherein $R^1$ and $R^2$ are as defined above.

2. A process as in Claim 1, wherein the modifier is selected from the group consisting of thiomalic acid, 4,4'-dithiodi(n-butyric acid), dithiodiacetic acid, dithiodiglycolic acid, 2,2'-dithiodipropionic acid, 3-mercaptopropionic acid, 3,3'-dithiodipropionic acid, mercaptoacetic acid, 2-mercaptopropionic acid, mercaptovaleric acid, alkyl esters of these groups and alkali metal salts of these groups.

3. A process as in Claim 1, wherein 100 parts by weight of the polyphenylene sulfide and from 1 to 20 parts by weight of the modifier are reacted in from 10 to 5000 parts by weight of an organic solvent

capable of dissolving polyphenylene sulfide at a temperature of from 170° to 300°C.

4. A process as in Claim 3, wherein the organic solvent is selected from the group consisting of biphenyl, toluene, xylene, chlorobenzene, dichlorobenzene, chloronaphthalene, N-methyl-2-pyrrolidone, dimethylimidazolidinone, dimethylacetamide, and sulfolane.

5. A process as in Claim 1, wherein 100 parts by weight of the polyphenylene sulfide and from 0.01 to 20 parts by weight of the modifier are mixed and melt-kneaded in an extruder or a kneading machine at a temperature of from 150° to 350°C.

6. A carboxyl-containing polyphenylene sulfide obtainable by reacting polyphenylene sulfide with a modifier selected from the group consisting of a mercapto compound represented by formula (I):

$HS\text{-}R^1\text{-}COOR^2$ (I)

wherein $R^1$ represents an aliphatic or alicyclic group having from 1 to 10 carbon atoms; and $R^2$ represents a hydrogen atom, a hydrocarbon group having from 1 to 10 carbon atoms, or an alkali metal atom,
and a disulfide compound represented by formula (II):

$R^2OOC\text{-}R^1\text{-}S\text{-}S\text{-}R^1\text{-}COOR^2$ (II)

wherein $R^1$ and $R^2$ are as defined above, wherein the modifier is grafted in a grafting ratio of from 0.1 to 10% by weight.

7. A carboxyl-containing polyphenylene sulfide as in Claim 6, wherein the carboxyl-containing polyphenylene sulfide has a number average molecular weight of $2 \times 10^3$ or more and a weight average molecular weight of $8 \times 10^3$ or more as determined by gel-permeation chromatography using $\alpha$-chloronaphthalene as a solvent and has a melt viscosity of from 100 to 100000 poise as measured at 300°C and at a shear rate of 100 $s^{-1}$.

8. A carboxyl-containing polyphenylene sulfide as in Claim 6, wherein said modifier is selected from the group consisting of thiomalic acid, 4,4'-dithiodi(n-butyric acid), dithiodiacetic acid, dithiodiglycolic acid, 2,2'-dithiodipropionic acid, 3-mercaptopropionic acid, 3,3'-dithiodipropionic acid, mercaptoacetic acid, 2-mercaptopropionic acid, mercaptovaleric acid, alkyl esters of these groups and alkali metal salts of these groups.

9. A thermoplastic resin composition comprising
(A) from 10 to 90% by weight of carboxyl-containing polyphenylene sulfide obtainable by reacting polyphenylene sulfide with a modifier selected from the group consisting of a mercapto compound represented by formula (I):

$HS\text{-}R^1\text{-}COOR^2$ (I)

wherein $R^1$ represents an aliphatic or alicyclic group having from 1 to 10 carbon atoms; and $R^2$ represents a hydrogen atom, a hydrocarbon group having from 1 to 10 carbon atoms, or an alkali metal atom,
and a disulfide compound represented by formula (II):

$R^2OOC\text{-}R^1\text{-}S\text{-}S\text{-}R^1\text{-}COOR^2$ (II)

wherein $R^1$ and $R^2$ are as defined above
and
(B) from 10 to 90% by weight of a functional polyphenylene ether selected from the group consisting of
($b_1$) an epoxy-containing polyphenylene ether,
($b_2$) an alcoholic hydroxyl-containing polyphenylene ether represented by formula (III):

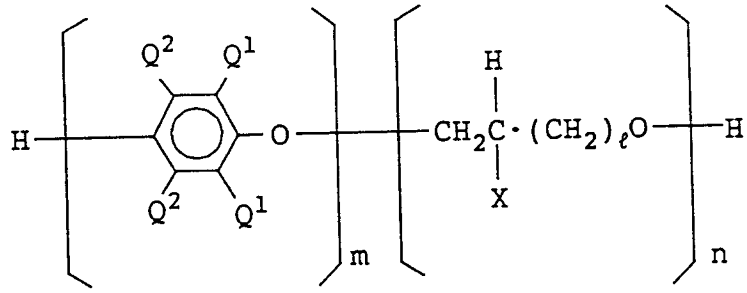 (III)

wherein $Q^1$ represents a halogen atom, a primary or secondary alkyl group, an araliphatic hydrocarbon group, an aminoalkyl group, a halo-hydrocarbon group, a hydrocarbon oxy group, or a halo-hydrocarbon oxy group; $Q^2$ represents a hydrogen atom, a halogen atom, a primary or secondary alkyl group, a halo-hydrocarbon group, or a halo-hydrocarbon oxy group; X represents a hydrogen atom, an alkyl group having from 1 to 8 carbon atoms, or a hydroxyl group; $\ell$ represents a number of from 0 to 8; m represents a number of from 10 to 400; and n represents a number of from 1 to 10,

($b_3$) an alcoholic hydroxyl-containing polyphenylene ether obtained by reacting polyphenylene ether with a (meth)acrylate represented by formula (IV):

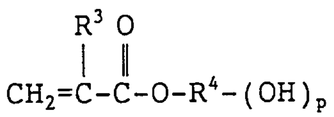 (IV)

wherein $R^3$ represents a hydrogen atom or a methyl group; $R^4$ represents a hydrocarbon group having from 2 to 4 carbon atoms; and p represents 1 or 2,

and

($b_4$) an amino-containing polyphenylene ether.

**10.** A thermoplastic resin composition as in Claim 9, wherein the modifier is selected from the group consisting of thiomalic acid, 4,4'-dithiodi(n-butyric acid), dithiodiacetic acid, dithiodiglycolic acid, 2,2'-dithiodipropionic acid, 3-mercaptopropionic acid, 3,3'-dithiodipropionic acid, mercaptoacetic acid, 2-mercaptopropionic acid, mercaptovaleric acid, alkyl esters of the above groups and alkali metal salts of the above groups.

**11.** A thermoplastic resin composition as in Claim 9, wherein the carboxyl-containing polyphenylene sulfide has a number average molecular weight of $2 \times 10^3$ or more and a weight average molecular weight of $8 \times 10^3$ or more as determined by gel-permeation chromatography using $\alpha$-chloronaphthalene as a solvent and has a melt viscosity of from 100 to 100000 poise as measured at 300 °C and at a shear rate of 100 $s^{-1}$.

**12.** A thermoplastic resin composition as in Claim 9, wherein the carboxyl-containing polyphenylene sulfide contains the modifier in a grafting ratio of from 0.1 to 10% by weight.

**13.** A thermoplastic resin composition as in Claim 9, wherein the (meth)acrylate represented by formula (IV) is 2-hydroxyethyl methacrylate.

FIG. 1

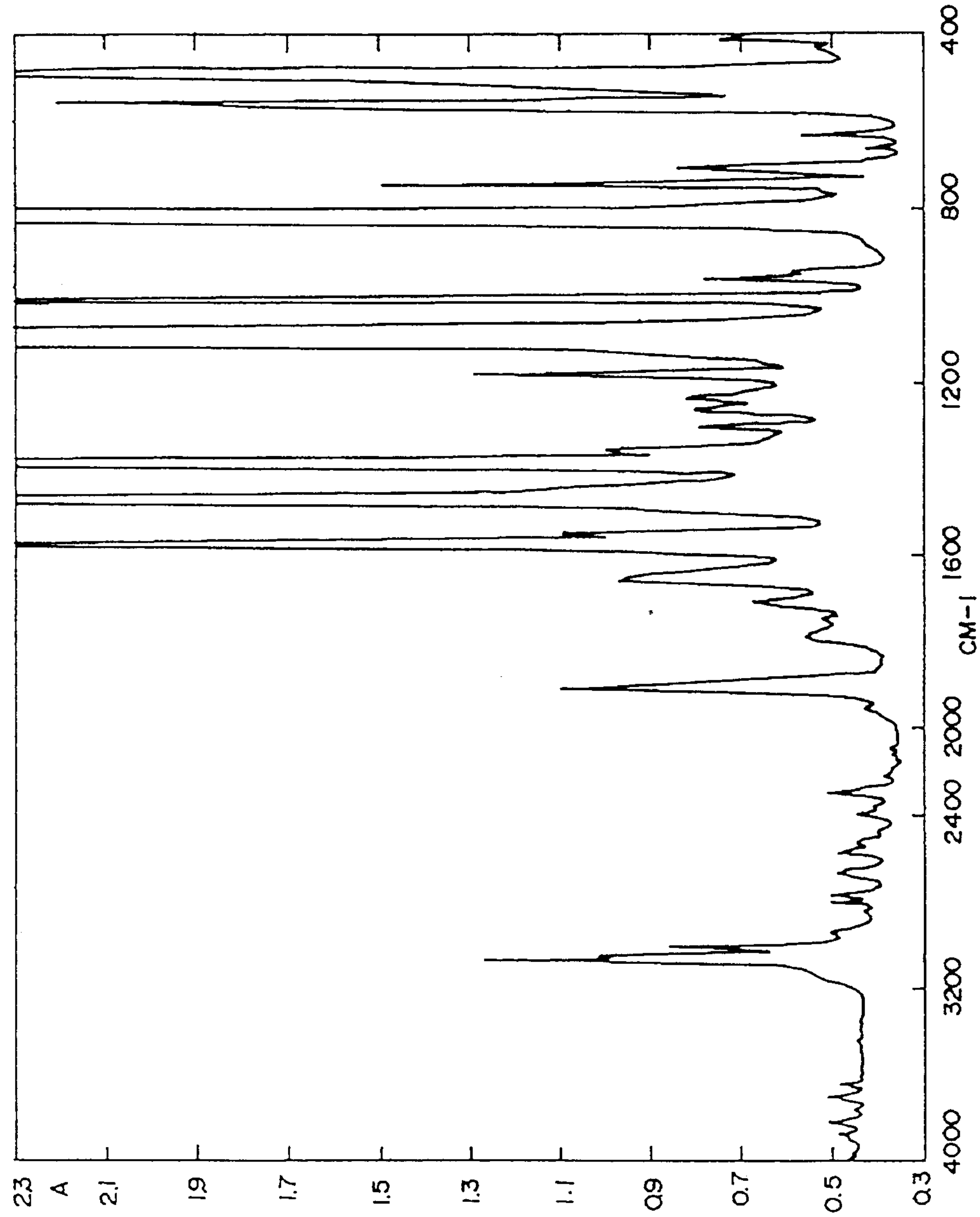
2.3
A
2.1
1.9
1.7
1.5
1.3
1.1
0.9
0.7
0.5
0.3
4000
3200
2400
2000
1600
1200
800
400
CM-1

European Patent Office

# EUROPEAN SEARCH REPORT

Application Number

EP 92 12 1589
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,A | EP-A-0 472 960 (MITSUBISHI PETROCHEMICAL COMPANY)<br>* claims; examples *<br>--- | 9-13 | C08G75/02<br>C08L81/02<br>C08L71/12<br>C08G81/00 |
| D,A | EP-A-0 405 135 (GENERAL ELECTRIC)<br>* claim 1 *<br>--- | 1-8 | |
| A | CHEMICAL ABSTRACTS, vol. 105, no. 26, 29 December 1986, Columbus, Ohio, US;<br>abstract no. 227349,<br>V. A. SERGEEV 'reactive alpha-omega oligoarylene sulfides'<br>page 1 ;column 1 ;<br>* abstract *<br>& DOKL AKAD. NAUK SSSR<br>vol. 290, no. 3, 1986,<br>pages 634 - 637<br>--- | 1-8 | |
| A | EP-A-0 452 705 (GENERAL ELECTRIC)<br>* claims 1,2,12,14; examples *<br>--- | 1-13 | |
| | | | TECHNICAL FIELDS SEARCHED (Int. Cl.5 ) |
| A | DATABASE WPIL<br>Week 8904, 29 November 1989<br>Derwent Publications Ltd., London, GB;<br>AN 89-289827<br>& JP-A-1 213 360 (ASAHI CHEMICAL) 28 August 1989<br>* abstract *<br>--- | | C08G<br>C08L |
| A | POLYMER BULLETIN<br>vol. 4, no. 8, April 1981, OXFORD<br>pages 459 - 466<br>G. DACCORD AND B. SILLION 'alpha-omega difunctionalized poly(p-thiophenylene) oligomers'<br>---<br>-/-- | 1 | |

The present search report has been drawn up for all claims

| Place of search | Date of completion of the search | Examiner |
|---|---|---|
| THE HAGUE | 13 APRIL 1993 | KLIER E.K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent Office

# EUROPEAN SEARCH REPORT

Application Number

EP 92 12 1589
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 164 639 (BAYER AG)<br>* page 7, line 7 - page 8, line 9; claims 1,2 *<br>----- | 1-8 | |
| | | | TECHNICAL FIELDS SEARCHED (Int. Cl.5 ) |

The present search report has been drawn up for all claims

| Place of search | Date of completion of the search | Examiner |
|---|---|---|
| THE HAGUE | 13 APRIL 1993 | KLIER E.K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document